Europäisches Patentamt

European Patent Office

Office européen des brevets

(11) Numéro de publication: **0 243 290**
**A1**

(12) **DEMANDE DE BREVET EUROPEEN**

(21) Numéro de dépôt: **87470005.7**

(22) Date de dépôt: **19.02.87**

(51) Int. Cl.⁴: **B 23 D 61/02**
**B 23 D 63/10**
**// A01G3/08, A01D34/73**

(30) Priorité: **20.02.86 FR 8602463**

(43) Date de publication de la demande:
**28.10.87 Bulletin 87/44**

(84) Etats contractants désignés:
**AT BE CH DE ES GB IT LI LU NL SE**

(71) Demandeur: **Mazelin, Michel**
**Vougecourt**
**F-70500 Jussey (FR)**

(72) Inventeur: **Mazelin, Michel**
**Vougecourt**
**F-70500 Jussey (FR)**

(74) Mandataire: **Poupon, Michel**
**3, rue Thiers B.P. 247**
**F-88007 Epinal Cedex (FR)**

(54) **Lame de scie circulaire.**

㊿ Les dents (2) sont de profil sensiblement hemi-circulaire, chacune des dents étant reliée à la suivante par un chant (4) dont le plan forme un angle aigu de petite valeur par rapport au plan tangent au disque au même point de manière à déterminer un angle d'attaque des dents déterminé par l'angle de deux chants successifs qui soit compris entre 10 et 15°.

FIG. 2    FIG.1

EP 0 243 290 A1

**Description**

Lame de Scie circulaire

La présente invention a pour objet une lame de scie circulaire, du type dans laquelle les dents disposées sur la périphérie de ladite lame sont décalées alternativement d'un côté et de l'autre du plan principal de la lame pour déterminer de la voie.

Des lames de ce type sont en elles-mêmes bien connues. La présence d'une voie évite que la lame ne se coince au sciage, car le trait de scie est légèrement plus large que l'épaisseur de la lame.

Les lames connues, utilisées en particulier pour le débroussaillage, présentent cependant un certain nombre d'inconvénients.

Tout d'abord, elles ont en général une denture de profil triangulaire classique. Ces dents nécessitent un affûtage fréquent, environ toutes les deux heures. Celui-ci est long du fait du nombre de dents et nécessite l'utilisation d'un étau dans la mesure où l'affûtage est essentiellement en direction radiale par rapport au disque.

L'obligation de l'usage d'un étau entraine l'impossibilité d'un affûtage sur le lieu d'utilisation et il est donc nécessaire d'avoir plusieurs lames à sa disposition pour un travail, par exemple, de débroussaillage en forêt.

De plus l'affûtage radial entraine rapidement la déformation puis la disparition des dents avec une consommation rapide du disque.

Le besoin se fait donc sentir de lames de scie qui aient une grande longévité, tout en offrant des performances améliorées.

Le besoin existe également de lames dont l'affûtage soit simplifié et ne nécessite en particulier pas l'usage d'un étau.

L'invention a pour objet de remédier à ces inconvénients et de satisfaire à ces besoins.

Conformément à l'invention, ce résultat est obtenu avec une lame de scie circulaire, du type dans laquelle les dents disposées sur la périphérie de ladite lame sont décalées alternativement d'un côté et de l'autre du plan principal de la lame pour déterminer de la voie, caractérisé en ce que les dents sont de profil sensiblement hemi-circulaire, chacune des dents étant reliée à la suivante par un chant dont le plan forme un angle aigu de petite valeur par rapport au plan tangent au disque au même point de manière à déterminer un angle d'attaque des dents déterminé par l'angle de deux chants successifs qui soit compris entre I0 et I5 °.

Grâce à cette conformation des dents de la lame selon l'invention, l'affûtage est opéré dans une direction sensiblement tangente et non plus radiale. Celui-ci n'entraine qu'une diminution minimum du diamètre et n'a que peu d'effet sur la longévité de la lame tour en lui conservent les mêmes qualités d'utilsiation.

D'autre part cette structure est encore renforcée si, conformément à une autre caractéristique de l'invention, on prévoit sur la lame un nombre limité de dents, de préférence compris entre 26 et 36, avantageusement 3O.

On obtient ainsi un rapport entre la hauteur des dents et la longueur des chants (en fait la longueur des dents) qui soit de I/4 à I/5 alors qu'il est de environ I/2 pour les lames traditionnelles.

On arrive ainsi à une lame ayant 2 à 3 fois moins de dents que les lames traditionnelles. Il s'ensuit un moindre échauffement du fait du nombre moindre de points de frottement.

Le faible nombre de dents entraine une longueur de dent importante. Cette structure, combinée à la forme hemi-circulaire de la dent, limite le phénomène de refus de coupe dû d'une part à la force centrifuge et d'autre part au nombre trop élevé de dents des lames traditionnelles. On constate également un excellent dégagement de la sciure.

La structure hemi-circulaire entraine encore un certain nombre d'avantages.

Ainsi, les dents peuvent être affûtées par une simple lime ronde, telle que par exemple les limes utilisées pour l'affûtage des chaines de tronçonneuses.

D'autre part, dans le cas de broussailles la coupe s'effectue essentiellement dans le creux de la dent et non sur la pointe comme c'est obligatoirement le cas pour une dent triangulaire.

Selon une caractéristique avantageuse de mise en oeuvre de l'invention les chants constituant la longueur des dents seront meulés de manière à ce que leur plan d'attaque soit perpendiculaire au plan principal de la lame. Il s'ensuit une efficacité de coupe encore améliorée.

On comprendra mieux l'invention à l'aide de la description ci-après d'un mode non limitatif de mise en oeuvre en référence aux dessins annexés dans lesquels :

- la figure I est une vue en plan partielle montrant la structure d'une lame dee scie conforme à l'invention;

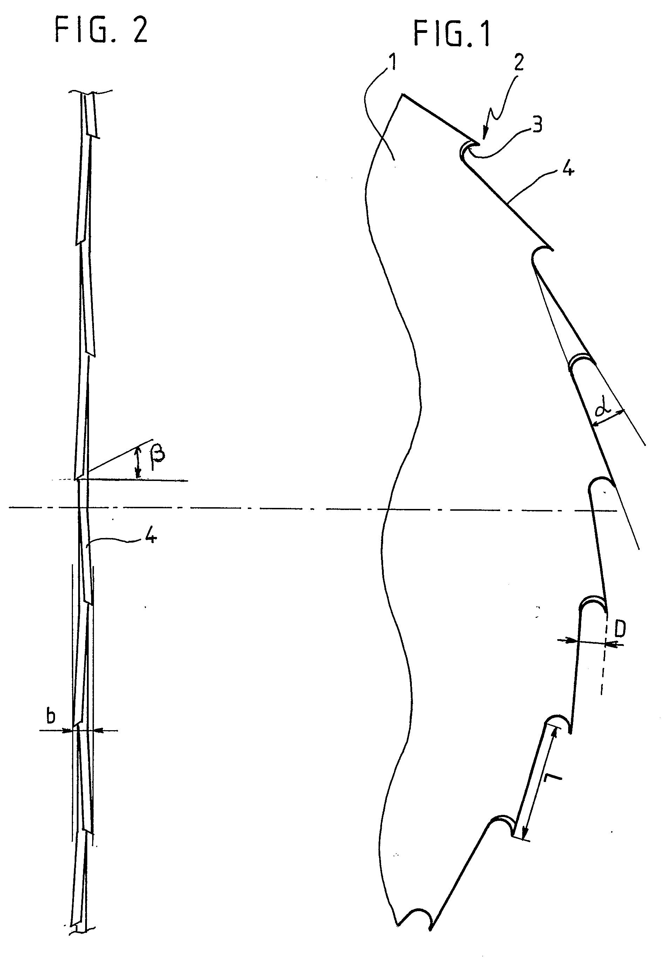

- la figure 2 est une vue partielle de profil d'une lame de scie conforme à l'invention.

La lame (I) conforme à l'invention comporte à sa périphérie des dents (2) dont la structure sera décrite ultérieurement.

les dents sont disposées alternativement d'un côté et de l'autre du plan du disque, comme représenté à la figure 2, pour donner de la voie. Cette voie est représentée par la valeur de la distance entre les points extrêmes de chacune des dents perpendiculairement au plan du disque distance b sur la figure 2).

On se référera maintenant à la figure I.

Les dents (2) ont une forme hemi-circulaire au niveau de leur ligne de coupe (3).

Chaque dent est reliée à la suivante, respectivement la précédente, par un chant (4), que l'on peut encore qualifier de ligne de dépouille. Il représente en fait la longueur de la dent. Le plan du chant (4) forme avec le plan de tangence au même endroit un angle aigu de petite valeur par rapport au plan tangent au disque au même point.

En outre, l'angle d'attaque $\alpha$ des dents déterminé par l'angle de deux chants successifs est compris

entre IO et I5 °

Il s'ensuit une direction générale proche de la tangente de chaque dent et non pas radiale comme pour les dents triangulaires.

Conformément à l'invention, le nombre de dents sur la lame sera compris entre 26 et 36, avantageusement 3O, quelque soit le diamètre de la lame.

On obtient de manière optimale un rapport entre la hauteur D des dents et la longeur L des chants compris entre I/4 et I/5.

Par ailleurs, le fond des dents est limé selon un angle β qui confère à la denture une forme type "gouge". De ce fait la pointe elle-même de la dent possède le même angle β que le fond des dents.

L'arête extrême d'attaque latérale contribue au maintien de la largeur de la voie et évite un phénomène de refus par rapport à un affûtage perpendiculaire classique.

L'angle β sera compris entre O et 5O°, de préférence égal à 3O°.

Cette structure autorise la coupe de troncs allant jusqu'à un diamètre de 2OO mm.

Selon une autre caractéristique, les chants (4) seront meulés de manière à ce que leur plan d'attaque soit perpendiculaire au plan de la lame de scie.

Cette lame peut être utilisée pour des travaux forestiers et agricole intensifs, tels que par exemple le débroussaillage, la coupe de l'herbe. L'utilisation d'une lame de type carbure, avec cette denture, permet une utilisation pour le délignage des planches.

Cette lame peut être adaptée à toute débroussailleuse classique, l'alésage central de la lame étant de type standard.

préférence 3O°.

5. Lame de scie selon l'une quelconque des revendications I à 4, caractérisé en ce que le plan d'attaque des chants (4) est meulé de manière à ce qu'il soit perpendiculaire au plan principal de la lame de scie.

## Revendications

I. Lame de scie circulaire, du type dans laquelle les dents disposées sur la périphérie de ladite lame sont décalées alternativement d'un côté et de l'autre du plan principal de la lame pour déterminer de la voie, caractérisé en ce que les dents (2) sont de profil sensiblement hemi-circulaire, chacune des dents étant reliée à la suivante par un chant (4) dont le plan forme un angle aigu de petite valeur par rapport au plan tangent au disque au même point de manière à déterminer un angle d'attaque des dents déterminé par l'angle α de deux chants successifs qui soit compris entre IO et I5°.

2. Lame de scie selon la revendication I, caractérisé en ce qu'elle comporte entre 26 et 36 dents, de préférence 3O dents.

3. Lame de scie selon l'une quelconque des revendications I à 2, caractérisé en ce que le rapport entre la hauteur D des dents et la longueur L des chants (4) est compris entre I/4 et I/5.

4. Lame de scie selon l'une quelconque des revendications I à 3, caractérisé en ce que le fond des dents et la pointe des dents sont limés selon un angle β compris entre O et 5O°, de

FIG. 2

FIG.1

0243290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 570 317  (M.F.C. MAZELIN) <br> * En entier * <br><br> --- | 1-5 | B 23 D   61/02 <br> B 23 D   63/10 // <br> A 01 G   3/08 <br> A 01 D   34/73 |
| X | EP-A-0 102 626  (R. JANSEN-HERFELD) <br> * En entier, en particulier figure 1 * <br><br> --- | 1-5 | |
| A | WO-A-8 402 676  (H. ERHARDT) <br> * Page 4, lignes 18-19; figure 2 * <br><br> --- | 1 | |
| A | C.H. HAYWARD: "Light machines for woodwork", 1952, pages 66-70, Evans Brother Ltd, Londres, GB <br> * Page 66,68,70; figures 1,5 * <br><br> --- | 1,4 | |
| | | | **DOMAINES TECHNIQUES RECHERCHES (Int. Cl.4)** |
| A | US-A-2 835 286  (B.S. WEAVER) <br> * En entier * <br><br> ----- | 1,5 | B 27 B <br> B 23 D |

Le présent rapport de recherche a été établi pour toutes les revendications

| Lieu de la recherche <br> LA HAYE | Date d'achèvement de la recherche <br> 18-05-1987 | Examinateur <br> MOET H.J.K. |
|---|---|---|